# EUROPEAN PATENT APPLICATION

(11) **EP 2 592 585 A1**
(43) Date of publication of application: **15.05.2013**
(21) Application number: 11845261.4
(22) Date of filing: 19.10.2011
(51) Int. Cl.: G06K 19/07, G06K 19/00, G06K 19/077, H01Q 1/46, H04B 3/54, H04B 5/02

(54) **ELECTRICAL APPLIANCE**

(30) Priority: 01.12.2010 JP 2010268252
(71) Applicant: Murata Manufacturing Co., Ltd., Kyoto 617-8555 (JP)
(72) Inventor: KIMURA Ikuhei, Nagaokakyo-shi Kyoto 617-8555 (JP); KATO Noboru, Nagaokakyo-shi Kyoto 617-8555 (JP); IEKI Tsutomu, Nagaokakyo-shi Kyoto 617-8555 (JP)
(74) Representative: Zimmermann, Tankred Klaus
(86) International application number: PCT/JP2011/074009
(87) International publication number: WO 2012/073608

(57) **Abstract**

To provide an electrical product capable of stable communication with a reader-writer and capable of preventing a wireless IC device from, for example, being damaged or detached.

A wireless IC device (30) processing a high-frequency signal is arranged in an electrical product main body (2), and an input-output terminal of the wireless IC device (30) is coupled to at least part of a power cable (15) externally extending from the electrical product main body (2).

## Description

### Technical Field

The present invention relates to electrical products and, more particularly, to an electrical product capable of preferably using wireless communication including a radio frequency identification (RFID) system.

### Background Art

Hitherto, RFID systems have been developed as article management systems. In such an RFID system, a reader-writer producing an electromagnetic field communicates with an RFID tag (wireless integrated circuit (IC) device) in a noncontact manner to transmit information. The RFID tag is attached to an article and stores certain information. Patent Documents 1 and 2 disclose examples in which RFID tags are used for recycle management of home electric appliances. However, since a tag is attached on a control board incorporated in the door of a refrigerator in a recycle system described in Patent Document 1, arrangement of a metal material around the tag can possibly inhibit stable communication with a reader writer. The mounting mode of the tag is not mentioned in Patent Document 2.

In contrast, Patent Document 3 discloses an example in which an RFID tag is attached on a power line or a plug and part of the power line is used as an antenna. However, when management is performed with the power cord being attached on a product, it is not possible to perform the management if the cord is pulled out from the product. It is not preferred to attach the tag on the cord in the light of repair or replacement of the cord when the cord is fixed to the product.

### Citation List

### Patent Document

Patent Document 1: Japanese Unexamined Patent Application Publication No. 2002-143826
Patent Document 2: Japanese Unexamined Patent Application Publication No. 2003-308363
Patent Document 3: Japanese Unexamined Patent Application Publication No. 2005-50581

### Summary of Invention

### Technical Problem

An object of the present invention is to provide an electrical product capable of stable communication with a reader-writer and capable of preventing its wireless IC device from, for example, being damaged or detached.

### Solution to Problem

In order to achieve the above object, an electrical product of an embodiment of the present invention is characterized in that a wireless IC device processing a high-frequency signal is arranged in a main body of the electrical product, and that an input-output terminal of the wireless IC device is coupled to at least part of a power cable externally extending from the main body of the electrical product.

In the above electrical product, the power cable to which the wireless IC device is coupled functions as a monopole antenna or a dipole antenna to establish wireless communication with a reader-writer in order to manage, for example, the recycle and/or the life cycle of the electrical product. Since the power cable externally extending from the electrical product functions as an antenna, stable communication is available without causing a problem in the wireless communication even if a metal material is arranged adjacent to the wireless IC device or a cover of the electrical product is made of a metal. In addition, since the wireless IC device is arranged inside the main body of the electrical product, the wireless IC device is not damaged or detached due to, for example, an external impact.

### Advantageous Effects of Invention

According to the present invention, it is possible to establish the stable wireless communication and to prevent the wireless ICdevice from, for example, being damaged or detached.

### Brief Description of Drawings

[Fig. 1] Fig. 1 is a descriptive diagram showing the relationship between an electrical product of a first embodiment and a communication system.
[Fig. 2] Fig. 2 is a descriptive diagram showing an arrangement of a wireless IC device in the electrical product of the first embodiment.
[Fig. 3] Fig. 3 is a descriptive diagram concerning a main part in Fig. 2.
[Fig. 4] Figs. 4(A) and 4(B) descriptive diagrams showing other examples of the arrangement of the wireless IC device.
[Fig. 5] Fig. 5 is a descriptive diagram showing another example of the wireless IC device.
[Fig. 6] Fig. 6 is a descriptive diagram showing the relationship between an electrical product of a second embodiment and a communication system.
[Fig. 7] Fig. 7 is a descriptive diagram showing an arrangement of a wireless IC device in the electrical product of the second embodiment.
[Fig. 8] Fig. 8 is a descriptive diagram showing the relationship between an electrical product of a third embodiment and a communication system.
[Fig. 9] Fig. 9 is a descriptive diagram showing an arrangement of a wireless IC device in the electrical product of the third embodiment.

### Description of Embodiments

Electrical products according to embodiments of the present invention will herein be described with reference to the attached drawings. The common reference numerals are used in each drawing to identify the same components and portions. A description of such components and portions is omitted herein,

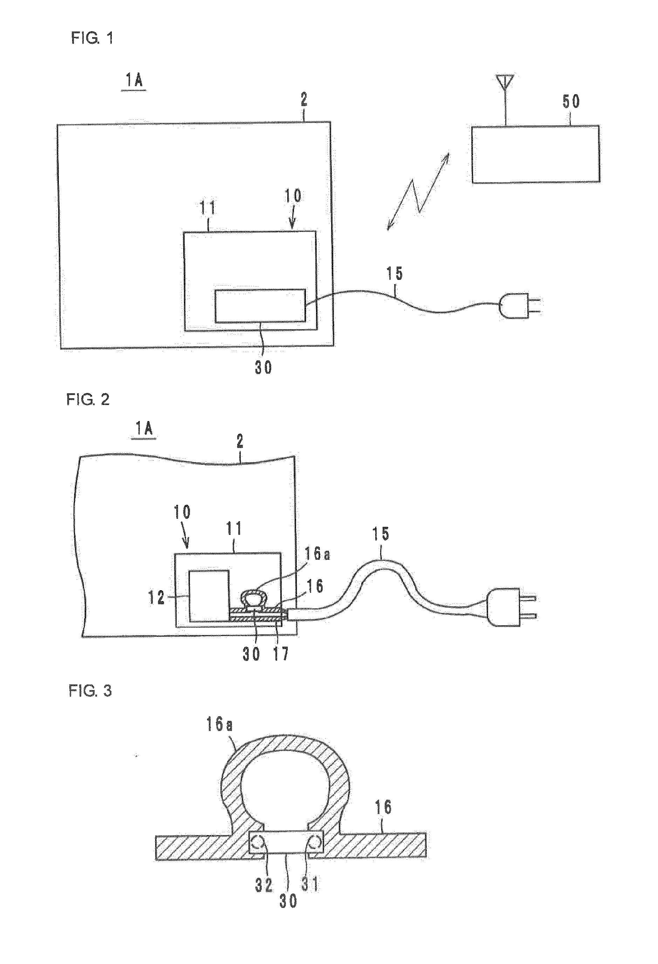

### (First embodiment, refer to Fig. 1 to Fig. 3)

In an electrical product 1A of a first embodiment, as shown in Fig. 1, a wireless 1C device 30 is installed on a board 11 of a power supply unit 10 incorporated in a product main body 2 made of, for example, a metal and the wireless ICdevice 30 is (directly or indirectly) coupled to at least part of a power cable 15 externally extending from the product main body 2. The power cable 15 functions as an antenna for the wireless IC device 30 to perform wireless communication with a reader-writer 50 in an RFID system in a certain frequency band. The "coupling," in this description means any of direct electrical coupling, magnetic field coupling, electric field coupling, and electromagnetic field coupling.

Specifically, as shown in Fig. 2, the power board 11 has conductor patterns 16 and 17 formed thereon, in addition to a power supply unit 12. The conductor patterns 16 and 17 are connected to the power cable 15. A loop conductor 16a is formed in an intermediate part of the conductor pattern 16, as shown in Fig. 3. Input-output terminals 31 and 32 of the wireless IC device 30 are coupled to both ends of the loop conductor 16a. The loop conductor 16a has a function to match the impedance with the wireless IC device 30 in accordance with its line length.

The wireless IC device 30 is heretofore commonly known as an RFID tag and includes a processing circuit (including a central processing unit (CPU) and a rewritable memory) processing a high-frequency signal. A combination of a wireless IC chip and a feed circuit board including a feed circuit coupled to the wireless IC chip may be used as the wireless IC device 30.

In the above configuration, the input-output terminals 31 and 32 of the wireless ICdevice 30 are coupled to the loop conductor 16a to transmit power and a high-frequency signal, the loop conductor 16a is coupled to one of the conductors of the power cable 15 via the conductor pattern 16, and the power cable 15 functions as a monopole antenna. Accordingly, it is possible to establish the communication between the wireless IC device 30 and the external reader-writer 50 via the power cable 15. The communication is available even in a state in which the power cable 15 is pulled out from an outlet.

Since the power cable 15 externally extending from the electrical product 1A functions as an antenna in the first embodiment, stable communication is available without causing a problem in the wireless communication even if a metal material is arranged adjacent to the wireless IC device 30 or a cover of the electrical product is made of a metal. In addition, since the wireless IC device 30 is arranged inside the product main body 2, the wireless IC device 30 is not damaged or detached due to, for example, an external impact. Furthermore, since the wireless IC device 30 is coupled to one conductor of the power cable 15, the power voltage applied to the input-output terminals 31 and 32 is very small and, thus, the wireless IC device 30 is not damaged by the application of the voltage.

The power board 11 may be a multilayer board and The conductor patterns 16 and 17 and the loop conductor 16a may be incorporated in the board 11 when the board 11 is formed of a multilayer board. The wireless IC device 30 may be incorporated in the board 11.

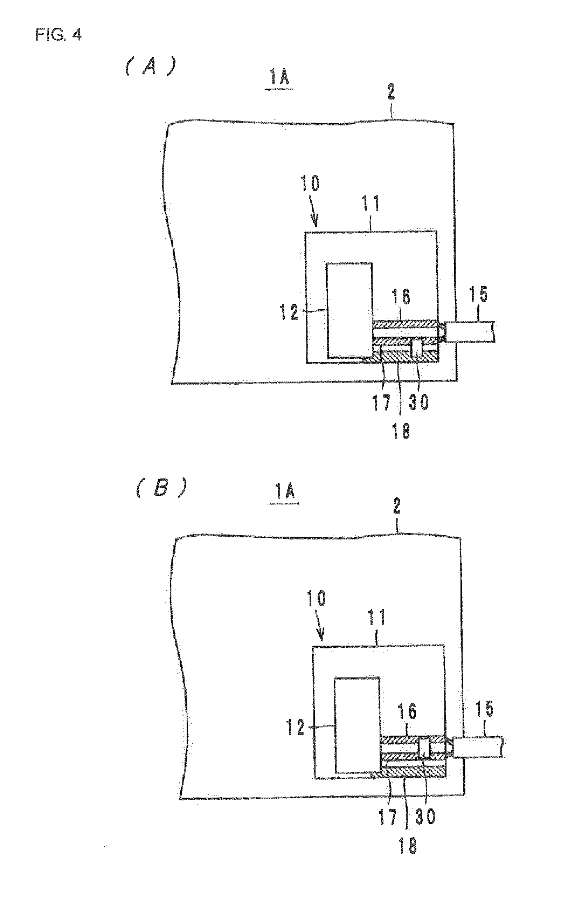

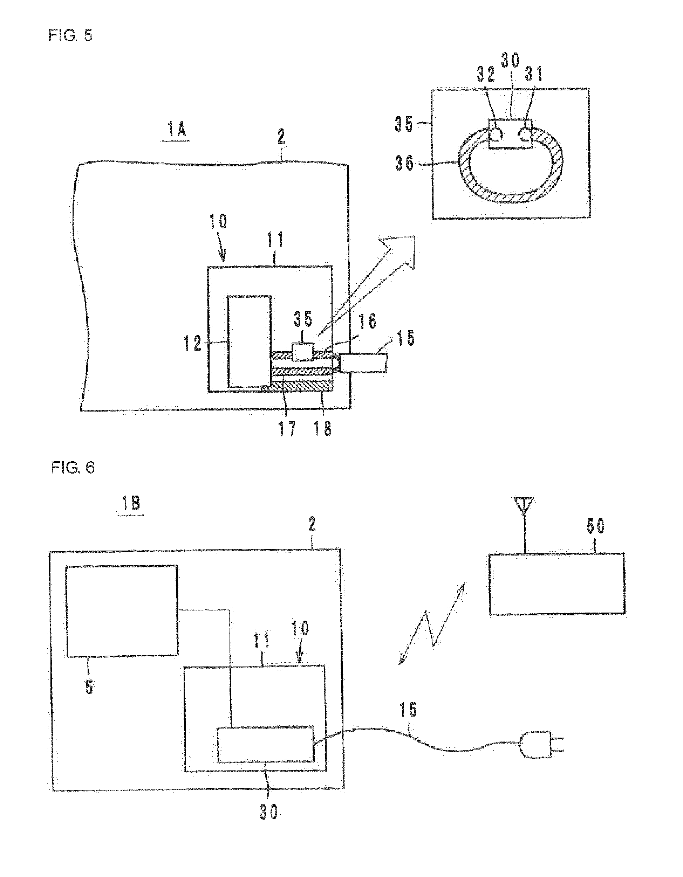

### (Modifications, refer to Fig. 4 and Fig. 5)

Modifications of the arrangement of the wireless IC device 30 in the first embodiment are shown in Figs. 4(A) and 4(B). In a first modification shown in Fig. 4(A), the conductor patterns 16 and 17 and a ground pattern 18 are formed on the power board 11 and the wireless IC device 30 is coupled to the conductor pattern 17 and the ground pattern 18. In this case, one conductor of the power cable 15 connected to the conductor pattern 17 functions as a monopole antenna. In a second modification shown in Fig. 4(B), the wireless ICdevice 30 is coupled to the conductor patterns 16 and 17. In this case, both of the conductors of the power cable 15 connected to the conductor patterns 16 and 17 functioning as a dipole antenna.

Since the loop conductor 16a is not required in the first and second modifications described above, unlike the first embodiment, it is possible to reduce the area where the wireless IC device 30 is installed.

In a third modification shown in Fig. 5, a loop conductor 36 for impedance matching is formed on a child board 35 and the wireless ICdevice 30 is coupled to both ends of the loop conductor 36. The child board 35 is installed on the conductor pattern 16 formed on the power board 11 and, thus, the loop conductor 36 is coupled to the conductor pattern 16. In other words, the wireless IC device 30 is coupled to the loop conductor 36 and the loop conductor 36 is coupled to the power cable 15 via the conductor pattern 16. Accordingly, one of the conductors of the power cable 15 functions as a monopole antenna. According to the third modification, the installation of the child board 35 on the power supply unit 10 allows even an electrical product on which the wireless IC device 30 is not planned to be installed to be incorporated in an RFID system. In addition, for example, no power voltage or no external electrostatic input is directly applied to the wireless IC device 30 and, thus, it is possible to reduce the risk of breaking the wireless IC device 30.

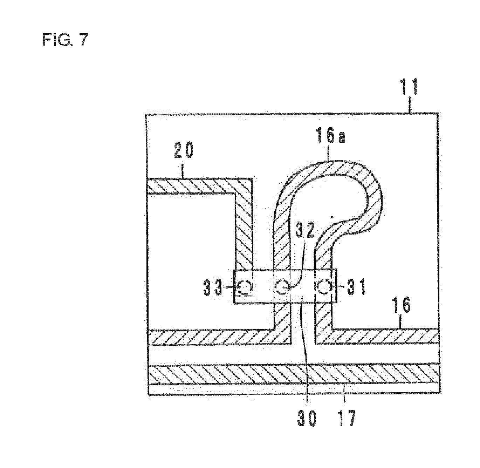

### (Second embodiment, refer to Fig. 6 and Fig. 7)

In an electrical product 1B of a second embodiment, as shown in Fig. 6, the wireless IC device 30 is installed on the power board 11, is (directly or indirectly) coupled to at least part of the power cable 15, and is connected to a main body control circuit 5 of the electrical product 1B.

Specifically, as shown in Fig. 7, the conductor patterns 16 and 17 connected to the power cable 15 and a conductor pattern 20 connected to the main body control circuit 5 are formed on the power board 11, and the loop conductor 16a is formed in the conductor pattern 16. The wireless ICdevice 30 has a first terminal 31, a second terminal 32, and a third terminal 33. The first and second terminals 31 and 32 are coupled to the conductor pattern 16 (a bottom part of the loop conductor 16a). In addition, the third terminal 33 is coupled to an end of the conductor pattern 20. The conductor patterns 16 and 17 are connected to the power supply unit 12 (refer to Fig. 2).

In the above configuration, the first and second terminals 31 and 32 of the wireless IC device 30 are coupled to the loop conductor 16a to transmit power and a high-frequency signal, the loop conductor 16a is coupled to one of the conductors of the power cable 15 via the conductor pattern 16, and the power cable 15 functions as a monopole antenna. Accordingly, it is possible to establish the communication between the wireless ICdevice 30 and the external reader-writer 50 via the power cable 15. In addition, it is possible to transmit necessary information to the main body control circuit 5 in a wired manner via the second and third terminals 32 and 33 of the wireless IC device 30. Although the terminal 32 and the conductor pattern 16 serve as terminals defining a ground potential for an information signal to be transmitted in the wired manner, the ground potential terminal is not limited to the above one. Another ground terminal may be additionally provided in the wireless IC device 30 and the terminal may be connected to the ground pattern on the board.

In the second embodiment, in addition to the functions of the above first embodiment, necessary information is transmitted from the reader-writer 50 to the wireless IC device 30, for example, even when the electrical product main body 2 is turned off, the information is stored in the memory of the wireless IC device 30, and the information is transmitted from the wireless IC device 30 to the main body control circuit 5 when the main body 2 is turned on to allow a necessary instruction to be issued to the electrical product 1B.

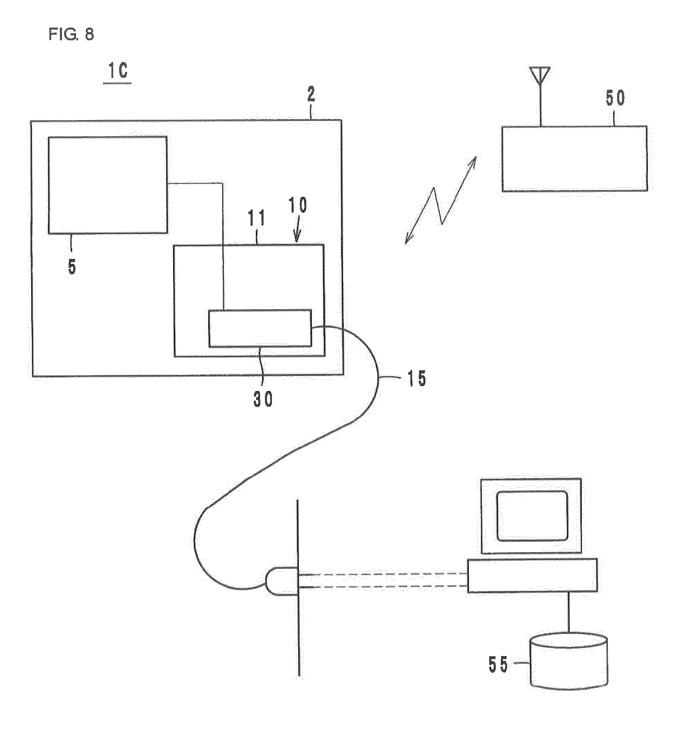

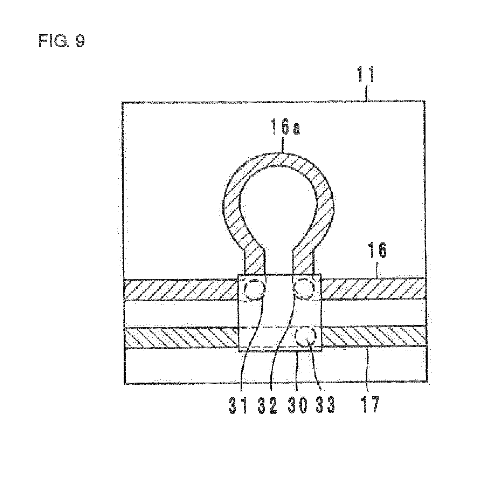

### (Third embodiment, refer to Fig. 8 and Fig. 9)

In an electrical product 1C of a third embodiment, as shown in Fig. 8, the wireless IC device 30 is installed on the power board 11, the wireless IC device 30 is (directly or indirectly) coupled to at least part of the power cable 15, the wireless IC device 30 is connected to the main body control circuit 5 in the electrical product 1C, and power line communication with a server 55 is available via the power cable 15.

Specifically, as shown in Fig. 9, the conductor patterns 16 and 17 connected to the power cable 15 are formed on the power board 11, and the loop conductor 16a is formed in the conductor pattern 16. The wireless IC device 30 has the first terminal 31, the second terminal 32, and the third terminal 33. The first and second terminals 31 and 32 are coupled to the conductor pattern 16 (a bottom part of the loop conductor 16a). In addition, the third terminal 33 is coupled to the conductor pattern 17. The conductor patterns 16 and 17 branch off into two to be connected to the power supply unit 12 (refer to Fig. 2) and the main body control circuit 5.

In the above configuration, the first and second terminals 31 and 32 of the wireless 1C device 30 are coupled to the loop conductor 16a to transmit power and a high-frequency signal, the loop conductor 16a is coupled to one of the conductors of the power cable 15 via the conductor pattern 16, and the power cable 15 functions as a monopole antenna. Accordingly, it is possible to establish the communication between the wireless IC device 30 and the external reader-writer 50 via the power cable 15. In addition, the power line communication with the server 55 is available through the second and third terminals 32 and 33 of the wireless IC device 30 and via the power cable 15.

In the third embodiment, in addition to the functions of the above first embodiment, for example, the server 55 is capable of acquiring information about the electrical product 1C by the power line communication and transmitting information and/or an instruction to the wireless IC device 30. The communication of this type is available even when the electrical product 1C is turned off. The server 55 normally manages multiple electrical products.

### (Other embodiments)

The electrical products according to the present invention are not limited to the embodiments described above and it will be clear that various modifications can be made within the spirit and scope of the present invention.

For example, electrical products, such as refrigerators, from which power cables are run are targeted and the present invention is widely applicable to various electrical products. The power supply unit and the board thereof may have arbitrary configurations. The power cable may not be fixed to the power board side and may be detachably connected via a connector provided on the power board. An alternating current (AC) adopter may be configured as an external unit and the power board may receive direct current (DC).

### Industrial Applicability

As described above, the present invention is useful for electrical products. In particular, the present invention is excellent in that the stable wireless communication is available and the wireless IC device can be prevented from, for example, being damaged or detached.

### Reference Signs List

1A, 1B, 1C electrical product
2 electrical product main body
5 main body control circuit
10 power supply unit
11 power board
15 power cable
16, 17, 20 conductor pattern
18 ground pattern
16a, 36 loop conductor
30 wireless IC device
31, 32, 33 input-output terminal
35 child board
50 reader-writer
55 server

## Claims

1. An electrical product,
wherein a wireless IC device processing a high-frequency signal is arranged in a main body of the electrical product, and
wherein an input-output terminal of the wireless IC device is coupled to at least part of a power cable externally extending from the main body of the electrical product.

2. The electrical product according to Claim 1,
wherein the wireless IC device is installed on a surface or in a first board on which a power supply circuit is installed.

3. The electrical product according to Claim 2,
wherein a conductor pattern connected to the power cable is formed on the first board, and a loop conductor for impedance matching with the wireless IC device is formed in at least part of the conductor pattern, and
wherein the wireless IC device is coupled to the loop conductor.

4. The electrical product according to Claim 1,
wherein a loop conductor for impedance matching with the wireless IC device is formed on a second board, and
wherein the wireless IC device is coupled to the loop conductor and the loop conductor is coupled to at least part of the power cable.

5. The electrical product according to Claim 4,
wherein a conductor pattern connected to the power cable is formed on a first board on which a power supply circuit is installed, and
wherein the second board is installed on the first board and the loop conductor is coupled to the conductor pattern.

6. The electrical product according to any of Claims 1 to 5,
wherein the wireless IC device has a second input-output terminal other than a first input-output terminal directly or indirectly coupled to the power cable, and The second input-output terminal is connected to a control circuit of the main body of the electrical product via a communication wire.

7. The electrical product according to any of Claims 1 to 5,
wherein the wireless IC device has a second input-output terminal other than a first input-output terminal directly or indirectly coupled to the power cable, and the second input-output terminal functions as a terminal for power line communication via the power cable.

8. The electrical product according to any of Claims 1 to 7,
wherein the coupling between the wireless IC device and the power cable, the conductor pattern, or the loop conductor or the coupling between the loop conductor and the power cable or the conductor pattern is any of direct electrical coupling, magnetic field coupling, electric field coupling, and electromagnetic field coupling.
